# FASCICULE DE BREVET EUROPEEN

(11) **EP 0 894 054 B1**
(45) Date de publication et mention de la délivrance du brevet: **21.11.2001**
(21) Numéro de dépôt: 98906971.1
(22) Date de dépôt: 04.02.1998
(51) Int. Cl.: B60H 1/24, B60K 37/00

(54) **CONDUIT D'AIR INTEGRE POUR PLANCHE DE BORD DE VEHICULE AUTOMOBILE**
INTEGRIERTER LUFTKANAL FÜR DAS ARMATURENBRETT EINES KRAFTFAHRZEUGES
INTEGRATED AIR CONDUIT FOR MOTOR VEHICLE INSTRUMENT PANEL

(30) Priorité: 05.02.1997 FR 9701296
(43) Date de publication de la demande: 03.02.1999
(73) Titulaire: VALEO CLIMATISATION, 78321 La Verrière (FR)
(72) Inventeur: DAUSCH, Uwe, F-78320 Le Mesnil Saint Denis (FR)
(74) Mandataire: Gamonal, Didier
(86) Numéro de dépôt international: FR9800203
(87) Numéro de publication internationale: WO9834806

(56) Documents cités:
- DE-A- 2 839 571
- DE-A- 3 702 629
- DE-A- 3 818 666
- US-A- 3 635 305
- US-A- 4 646 879

## Description

L'invention concerne un conduit d'air propre à être intégré à une planche de bord d'un véhicule automobile, ainsi qu'un procédé pour sa fabrication.

Une planche de bord de véhicule automobile loge habituellement au moins un conduit de distribution d'air propre à être alimenté par un flux d'air traité provenant d'un appareil de chauffage-ventilation et/ou climatisation et à envoyer cet air traité vers des buses débouchant en des endroits choisis de l'habitacle du véhicule.

Ces buses comprennent habituellement des buses de dégivrage pour assurer le dégivrage/désembuage du pare-brise et, le cas échéant, de glaces latérales du véhicule. Ces buses comprennent également des aérateurs disposés sur une partie frontale de la planche de bord et réparties entre des aérateurs latéraux et au moins un aérateur central.

La plupart des planches de bord connues logent une pluralité de conduits, généralement en matière plastique, interposés entre l'appareil de chauffage-ventilation et/ou climatisation et les différentes buses.

Les buses de dégivrage/désembuage sont généralement alimentées par des conduits en matière plastique fixés sous l'armature de la planche de bord et reliés à un diffuseur, également en matière plastique, fixé lui aussi sous l'armature de la planche de bord et destiné à être relié à la sortie de l'appareil de chauffage-ventilation et/ou climatisation.

De même, les aérateurs sont généralement alimentés par des conduits en matière plastique assemblés mécaniquement, fixés sous l'armature de la planche de bord et reliés à un autre diffuseur.

Ainsi, la diffusion d'air dans ces planches de bord connues nécessite une multiplicité de conduits et de raccords interposés entre l'appareil de chauffage-ventilation et/ou climatisation et les buses. Il en résulte un certain nombre d'inconvénients : fuites possibles à cause des raccords, bruits d'air (vibrations des parois des tubes), pertes thermiques, pertes aérauliques, nombre de pièces élevé, encombrement dans la planche de bord, procédé de montage long et compliqué, d'où un coût élevé.

On connaît aussi, d'après la publication DE-3 818 666, une planche de bord comprenant un canal de distribution d'air intégré. Ce canal est réalisé sous la forme d'une seule pièce qui est fixée sur le dessus de la planche de bord. Cette solution connue permet, certes, de diminuer le nombre des pièces mais présente, néanmoins, la plupart des inconvénients mentionnés précédemment du fait notamment que le canal de distribution d'air n'est pas monobloc avec la planche de bord.

Jusqu'à présent, toutes les tentatives pour réaliser une planche de bord comportant un ou plusieurs conduits d'air intégrés n'ont pu véritablement aboutir, compte tenu notamment des problèmes posés par le moulage de parties creuses de formes complexes.

Le but de l'invention est de procurer un conduit d'air intégré pour une planche de bord de véhicule qui permet d'éviter les inconvénients mentionnés ci-dessus.

Elle propose à cet effet un conduit d'air pour une planche de bord de véhicule, lequel est réalisé sous la forme d'un conduit ouvert présentant une fente longitudinale limitée par deux lèvres, ce conduit ouvert étant réalisé d'une seule pièce avec la planche de bord par moulage d'une matière déformable autorisant un démoulage avec élargissement de la fente longitudinale, le conduit d'air comprenant des moyens de jonction pour réunir les lèvres de la fente longitudinale après démoulage.

Ainsi, le conduit d'air de l'invention est réalisé sous la forme d'un conduit ouvert en une matière déformable, qui peut être moulé à la forme voulue et ensuite démoulé avec élargissement de la fente du conduit, tout en étant formé d'une seule pièce avec la planche de bord.

En effet, compte tenu des propriétés de déformation et de souplesse de la matière utilisée pour le moulage, il est possible d'effectuer un démoulage avec contrainte en élargissant temporairement la fente longitudinale du conduit, les lèvres de la fente étant ensuite rapprochées en vue de leur réunion par les moyens de jonction.

Ce rapprochement est généralement favorisé par l'effet de mémoire élastique de la matière utilisée pour le moulage.

Dans une forme de réalisation préférée de l'invention, la fente longitudinale s'étend à l'opposé de la planche de bord, ce qui permet de faciliter le démoulage.

Selon une autre caractéristique de l'invention, la matière déformable est une matière plastique.

On préfère utiliser une mousse de matière plastique, car il s'agir d'un matériau qui est à la fois déformable et isolant thermiquement.

Les moyens de jonction peuvent être des moyens mécaniques. En particulier, ces moyens de jonction peuvent comprendre deux profilés de formes conjuguées formés respectivement sur les lèvres de la fente longitudinale et susceptibles d'être emboîtés mutuellement.

D'autres moyens de jonction sont envisageables, en particulier des moyens de collage ou de soudage.

Sous un autre aspect, l'invention concerne un procédé de fabrication d'un conduit d'air ayant une forme extérieure et une forme intérieure données, lequel comprend les opérations suivantes :
(a) prévoir un moule comportant une partie mâle et une partie femelle propres à délimiter conjointement une cavité de moulage adaptée à la forme extérieure du conduit et de la planche de bord, la partie mâle comportant un noyau adapté à la forme intérieure du conduit et rattachée à une âme étroite;
(b) injecter une matière de moulage entre la partie mâle et la partie femelle du moule de manière à remplir la cavité de moulage et former un conduit ouvert ménageant, en correspondance de l'âme, une fente longitudinale limitée par deux lèvres adjacentes;
(c) séparer la partie mâle et la partie femelle du moule;
(d) démouler le conduit d'air et la planche de bord en élargissant la fente pour l'extraction du noyau; et
(e) réunir les deux lèvres de la fente longitudinale pour fermer le conduit.

Dans une forme de réalisation de l'invention, l'opération (b) comprend l'injection de la matière de moulage entre la partie mâle et la partie femelle du moule dans une position rapprochée l'une de l'autre. Il s'agit alors d'un procédé d'injection en moule fermé.

Dans une autre forme de réalisation de l'invention, l'opération (b) comprend l'injection de la matière de moulage entre la partie mâle et la partie femelle du moule dans une position écartée l'une de l'autre, puis le rapprochement de la partie mâle et de la partie femelle du moule. Il s'agit alors d'un procédé d'injection du type à moule ouvert.

Le procédé de l'invention permet ainsi de réaliser un conduit de formes extérieure et intérieure données qui fait partie intégrante d'une planche de bord, et cela à l'aide d'un moule comportant des parties mâle et femelle complémentaires, la partie mâle comportant un noyau adapté à la forme intérieure du conduit.

Lors du démoulage, le noyau n'est pas extrait puisqu'il reste solidaire de la partie mâle. Le démoulage s'effectue par déformation avec contrainte du conduit, en raison des propriétés de déformation de la matière de moulage.

Pour le démoulage, il suffit de déformer le conduit en élargissant suffisamment la fente pour permettre l'extraction latérale du noyau.

La fabrication d'un conduit analogue, non fendu, en même temps que la planche de bord, ne serait pas possible avec un procédé de moulage classique, du fait que l'extraction du noyau, dans la direction axiale du conduit, serait impossible.

Dans une forme de réalisation de l'invention, le procédé comprend, avant l'opération d'injection, la mise en place d'un insert entre la partie mâle et la partie femelle du moule pour constituer une armature de la planche de bord.

En complément ou en variante, le procédé comprend, avant l'opération d'injection, la mise en place d'un revêtement entre la partie mâle et la partie femelle du moule pour constituer une peau extérieure de la planche de bord, à l'opposé du conduit.

De façon préférentielle, l'opération d'injection comprend l'injection d'une matière plastique susceptible de former une mousse.

L'opération de réunion des deux lèvres de la fente longitudinale s'effectue de préférence, soit par assemblage mécanique, soit encore par collage.

Sous un autre aspect, l'invention concerne une planche de bord de véhicule qui comprend au moins un conduit d'air intégré tel que défini précédemment.

Dans la description qui suit, faite seulement à titre d'exemple, on se réfère au dessin annexé, sur lequel :
- la figure 1 est une vue de dessus d'une planche de bord de véhicule automobile comprenant des conduits d'air intégrés selon l'invention;
- la figure 2 est une vue partielle en coupe, à échelle agrandie, selon la ligne II-II de la figure 1, le conduit étant représenté en configuration ouverte;
- la figure 3 est une vue analogue à celle de la figure 2, le conduit étant en configuration fermée;
- la figure 4 est une vue en coupe d'un moule en deux parties pour la fabrication d'une planche de bord à conduits intégrés selon la figure 1, le moule étant vide; et
- la figure 5 est une vue analogue à celle de la figure 4 après mise en place d'un insert et injection de matière plastique.

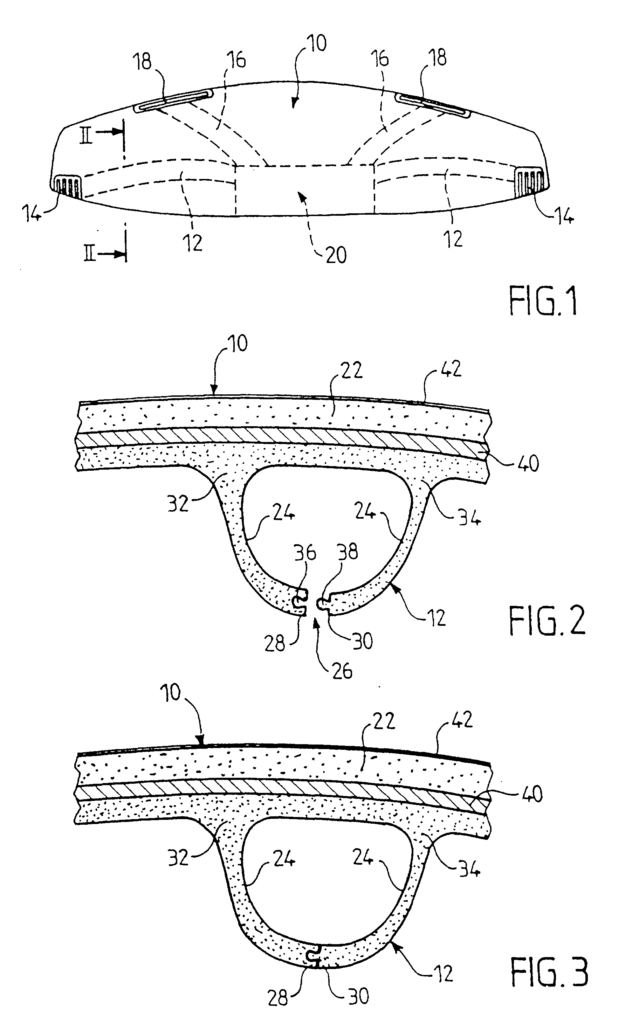

On se réfère tout d'abord à la figure 1 qui représente une planche de bord 10 de véhicule automobile, qui intègre deux conduits d'air 12 (conduits d'aération) menant à des buses d'aération 14 prévues respectivement aux deux extrémités de la planche de bord, ainsi que deux conduits d'air 16 (conduits de dégivrage) menant respectivement à deux buses 18 servant au dégivrage/désembuage du pare-brise (non représenté) du véhicule.

Les deux conduits 12 et les deux conduits 16 sont alimentés à partir d'un appareil de chauffage-ventilation 20 disposé sous la planche de bord, dans le compartiment moteur ou dans l'habitacle du véhicule.

L'appareil 20 comporte des moyens de réglage et des moyens de distribution pour envoyer de l'air traité dans les conduits 12 et 16, sur ordre de l'utilisateur.

Ces conduits possèdent des formes généralement complexes pour tenir compte de différentes contraintes, notamment d'encombrement, causées par différents appareillages logés sous la planche de bord.

On se réfère maintenant à la figure 2 pour décrire plus particulièrement la structure d'un conduit d'air, en l'espèce le conduit 12 situé du côté gauche de la planche de bord 10, ce conduit étant intégré à la planche de bord.

Comme on peut le voir sur la figure 2, la planche de bord 10 comprend une âme 22 conformée par moulage en même temps que les conduits d'air précités, notamment le conduit 12. Ce dernier est réalisé sous la forme d'un conduit ouvert présentant une paroi 24 ayant une section transversale en forme d'anneau ouvert, cette paroi 24 étant interrompue par une fente longitudinale 26 limitée par deux lèvres adjacentes 28 et 30. La paroi 24 se rattache à l'âme 22 de la planche de bord dans la région de deux zones 32 et 34. Les lèvres 28 et 30 comportent deux profils conjugués, à savoir respectivement un profil femelle 36 et un profil mâle 38 susceptibles de coopérer par emboîtement pour assurer la fermeture du conduit.

La planche de bord 10 et le conduit 12 sont réalisés monobloc à partir d'une matière déformable propre à leur conférer notamment des propriétés de souplesse autorisant une fabrication avec une opération d'injection de la matière déformable, suivie d'une opération de démoulage avec élargissement de la fente 26, comme on le verra plus loin.

Dans l'âme 22 de la planche de bord 10 est noyé, lors du moulage, un insert 42 propre à servir d'armature de rigidification. Cet insert peut être constitué notamment par une grille en métal ou en matière plastique possédant des ouvertures pour permettre le passage de la matière de moulage.

Dans l'exemple représenté sur la figure 2, la planche de bord comporte en outre un revêtement extérieur 42 constituant une "peau" d'aspect choisi, ce revêtement étant situé à l'opposé de l'âme 22 par rapport au conduit 12.

Après démoulage de la matière plastique, le conduit 12 se trouve dans une configuration ouverte, comme montré à la figure 2, dans laquelle les lèvres 28 et 30, bien qu'étant proches l'une de l'autre, ne sont pas emboîtées.

Pour assurer la fermeture du conduit, il suffit de rapprocher mécaniquement les lèvres 28 et 30 et de les emboîter pour aboutir à une configuration fermée, comme montré à la figure 3.

Bien entendu, la réunion des deux lèvres 28 et 30 peut s'effectuer par d'autres moyens, notamment pour collage.

Il est à noter que la réunion des deux lèvres de la fente est généralement facilitée par les propriétés de mémoire élastique de la matière plastique, grâce auxquelles les lèvres 28 et 30 se retrouvent proches l'une de l'autre après l'opération de démoulage.

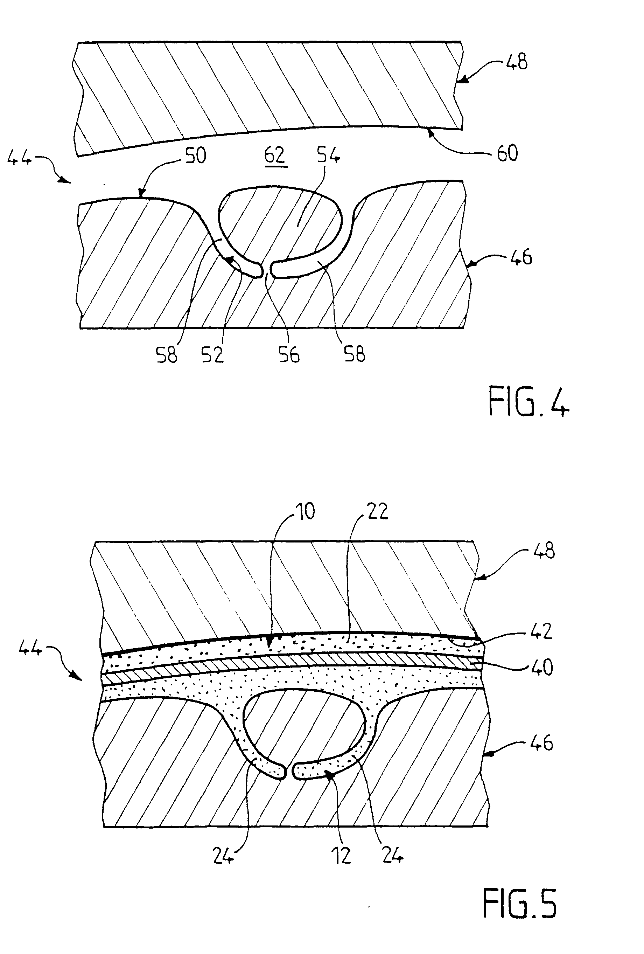

On se réfère maintenant aux figures 4 et 5 pour décrire la fabrication de la planche de bord 10 avec ses conduits intégrés, selon l'invention.

La fabrication s'effectue par moulage, au moyen d'un moule 44 en deux parties (figure 4) comportant une partie mâle 46 et une partie femelle 48 qui, dans l'exemple, sont représentées respectivement en position inférieure et en position supérieur.

La partie mâle 46 comporte un fond 50 présentant une partie creuse 52 dans laquelle est formé un noyau 54, ce dernier étant relié au reste de la partie 46 par une âme étroite 56 formant pont de matière. La partie creuse 52 et le noyau 54 délimitent conjointement deux régions incurvées 58 susceptibles de former au moulage les deux parties de la paroi 24 du conduit. L'âme 56 permet de réaliser la fente longitudinale 26 qui interrompt la paroi 24.

La partie femelle 48 comporte une face de moulage 60 destinée à venir en vis-à-vis du fond 50 de la partie mâle 46 pour réaliser le moulage de la face supérieure externe (face apparente) de la planche de bord.

Dans la position de la figure 4, la partie mâle 46 et la partie femelle 48 du moule 44 sont rapprochées et délimitent conjointement une cavité de moulage 62 de forme adaptée à celle de la planche de bord et du conduit.

Pour réaliser la fabrication de la planche de bord et du conduit intégré, on dispose entre les parties mâle et femelle du moule un insert 40 analogue à celui représenté aux figures 2 et 3. On dispose également le long de la face interne 60 de la partie mâle 48 un revêtement susceptible de former la peau extérieure 42. Ensuite, on injecte entre les parties mâle et femelle du moule une matière plastique déformable, de préférence une matière du type mousse ayant des propriétés de souplesse.

Après moussage de la matière plastique, on éloigne les parties 46 et 48 du moule, ce qui permet d'obtenir une planche de bord avec un conduit intégré, comme montré à la figure 2. La souplesse de la matière plastique utilisée, en particulier de la mousse, autorise un démoulage avec élargissement de la fente longitudinale 26. Les lèvres 28 et 30 de cette fente s'écartent alors l'une de l'autre et ont ensuite tendance à se rapprocher du fait des propriétés de mémoire élastique du matériau.

Ensuite, il suffit de réunir les deux lèvres 28 et 30, soit par emboîtement mécanique, comme montré aux figures 2 et 3, soit par tout autre moyen mécanique, ou encore par collage ou soudage.

L'injection de la matière plastique peut être, soit du type à moule ouvert, les deux parties du moule étant en position rapprochée, soit du type à moule fermé, les deux parties du moule étant d'abord écartées l'une de l'autre, puis ensuite rapprochées.

La matière de moulage est avantageusement une mousse de matière plastique, de préférence à pores fermés, par exemple du type polyuréthane.

La peau extérieure précitée peut être obtenue, soit par un revêtement séparé, soit à partir de la matière plastique elle-même.

Dans une variante de réalisation non représentée, le procédé de l'invention comprend en outre la mise en place d'un film entourant le noyau et l'âme de la partie mâle du moule pour former un film étanche à l'intérieur du conduit 12.

Le procédé de moulage de l'invention permet ainsi de réaliser une planche de bord réalisée monobloc avec un ou plusieurs conduits d'air intégrés. Ces conduits peuvent posséder des formes variées susceptibles d'offrir des parcours non linéaires, même sinueux, et offrant une section transversale de forme constante ou évolutive.

## Revendications

1. Conduit d'air intégré pour une planche de bord de véhicule automobile, **caractérisé en ce qu'**il est réalisé sous la forme d'un conduit ouvert (12) présentant une fente longitudinale (26) limitée par deux lèvres (28, 30), en ce conduit ouvert (12) est réalisé d'une seule pièce avec la planche de bord (10) par moulage d'une matière déformable autorisant un démoulage avec élargissement de la fente longitudinale (26), et **en ce qu'**il comprend des moyens de jonction (36, 38) pour réunir les lèvres (28, 30) de la fente longitudinale (26) après démoulage.

2. Conduit d'air selon la revendication 1, **caractérisé en ce que** la fente longitudinale (26) s'étend à l'opposé de la planche de bord (10).

3. Conduit d'air selon l'une des revendications 1 et 2, **caractérisé en ce que** la matière déformable est une matière plastique.

4. Conduit d'air selon l'une des revendications 1 à 3, **caractérisé en ce que** la matière déformable est une mousse de matière plastique.

5. Conduit d'air selon l'une des revendications 1 à 4, **caractérisé en ce que** les moyens de jonction comprennent des moyens mécaniques (36, 36).

6. Conduit d'air selon la revendication 5, **caractérisé en ce que** les moyens de jonction comprennent deux profils (36, 38) de formes conjuguées, formés respectivement sur les lèvres (28, 30) de la fente longitudinale (26) et susceptibles d'être emboîtés mutuellement.

7. Conduit d'air selon l'une des revendications 1 à 4, **caractérisé en ce que** les moyens de jonction comprennent des moyens de collage ou de soudage.

8. Procédé de fabrication d'un conduit d'air selon l'une des revendications 1 à 7, le conduit ayant une forme extérieure et une forme intérieure données, **caractérisé en ce qu'**il comprend les opérations suivantes :
(a) prévoir un moule (44) comportant une partie mâle (46) et une partie femelle (48) propres à délimiter conjointement une cavité de moulage (62) adaptée à la forme extérieure du conduit (12) et de la planche de bord (10), la partie mâle (46) comportant un noyau (54) adapté à la forme intérieure du conduit (12) et rattachée à une âme étroite (56);
(b) injecter une matière de moulage entre la partie mâle (46) et la partie femelle (48) du moule (44) de manière à remplir la cavité de moulage (62) et former un conduit ouvert (12) de section annulaire ouverte ménageant, en correspondance de l'âme (56), une fente longitudinale (26) limitée par deux lèvres adjacentes (28, 30);
(c) séparer la partie mâle (46) et la partie femelle (48) du moule (44);
(d) démouler le conduit (12) et la planche de bord (10) en élargissant la fente (10) pour l'extraction du noyau (54); et
(e) réunir les deux lèvres (28, 30) de la fente longitudinale (26) pour fermer le conduit (12).

9. Procédé selon la revendication 8, **caractérisé en ce que** l'opération (b) comprend l'injection de la matière de moulage entre la partie mâle (46) et la partie femelle (48) du moule dans une position rapprochée l'une de l'autre.

10. Procédé selon la revendication 8, **caractérisé en ce que** l'opération (b) comprend l'injection de la matière de moulage entre la partie mâle (46) et la partie femelle (48) du moule dans une position écartée l'une de l'autre, puis le rapprochement de la partie mâle (46) et de la partie femelle (48) du moule (44).

11. Procédé selon l'une des revendications 8 à 10, **caractérisé en ce qu'**il comprend, avant l'opération d'injection (b), la mise en place d'un insert (40) entre la partie mâle (46) et la partie femelle (48) du moule (44) pour constituer une armature de la planche de bord (10).

12. Procédé selon l'une des revendications 8 à 10, **caractérisé en ce qu'**il comprend, avant l'opération d'injection (b), la mise en place d'un revêtement (42) entre la partie mâle et la partie femelle du moule pour constituer une peau extérieure de la planche de bord (10), à l'opposé du conduit (12).

13. Procédé selon l'une des revendications 8 à 12, **caractérisé en ce que** l'opération d'injection (b) comprend l'injection d'une matière plastique susceptible de former une mousse.

14. Procédé selon l'une des revendications 8 à 13, **caractérisé en ce que** l'opération (e) comprend la réunion des deux lèvres (28, 30) de la fente longitudinale (26) par assemblage mécanique.

15. Procédé selon l'une des revendications 8 à 13, **caractérisé en ce que** l'opération (e) comprend la réunion des deux lèvres (28, 30) de la fente longitudinale (26) par collage ou soudage.

16. Planche de bord de véhicule, **caractérisée en ce qu'**elle comprend au moins un conduit d'air intégré (12) selon l'une des revendications 1 à 7 ou tel qu'obtenu par le procédé selon l'une des revendications 8 à 15.

## Patentansprüche

1. Integrierter Luftkanal für ein Kraftfahrzeugarmaturenbrett, **dadurch gekennzeichnet, dass** der Kanal in der Form eines offenen Kanals (12) dargestellt ist, welcher einen Längsspalt (26) aufweist, welcher von zwei Lippen (28, 30) begrenzt ist, dass der offene Kanal (12) einstückig mit dem Armaturenbrett (10) durch Formen bzw. Gießen eines verformbaren Materiales gebildet ist, welches eine Entformung mit Verbreiterung des Längsspaltes (26) erlaubt, und dass der Kanal eine Verbindungseinrichtung (36, 38) umfasst, um die Lippen (28, 30) des Längsspaltes (26) nach dem Entformen zusammenzuführen bzw. zu verbinden.

2. Luftkanal nach Anspruch 1, **dadurch gekennzeichnet, dass** der Längsspalt (26) sich gegenüberliegend dem Armaturenbrett (10) erstreckt.

3. Luftkanal nach einem der Ansprüche 1 und 2, **dadurch gekennzeichnet, dass** das verformbare Material ein Kunststoffmaterial ist.

4. Luftkanal nach einem der Ansprüche 1 bis 3, **dadurch gekennzeichnet, dass** das verformbare Material ein Kunststoffmaterialschaum ist.

5. Luftkanal nach einem der Ansprüche 1 bis 4, **dadurch gekennzeichnet, dass** die Verbindungseinrichtung bzw. Übergangseinrichtung eine mechanische Einrichtung (36, 36) umfasst.

6. Luftkanal nach Anspruch 5, **dadurch gekennzeichnet, dass** die Verbindungs- oder Übergangseinrichtung zwei konjugiert geformte Profile (36, 38) umfasst, jeweils ausgebildet an den Lippen (28, 30) des Längsspaltes (26) und geeignet zum wechselseitigen Eingriff.

7. Luftkanal nach einem der Ansprüche 1 bis 4, **dadurch gekennzeichnet, dass** die Verbindungs- oder Übergangseinrichtung eine Klebe- oder Schweiß- bzw. Löteinrichtung umfasst.

8. Verfahren zur Herstellung eines Luftkanals nach einem der Ansprüche 1 bis 7, bei welchem der Kanal über eine gegebene Außenform und Innenform verfügt, **dadurch gekennzeichnet, dass** das Verfahren die Schritte umfasst:
(a) Vorsehen einer Form (44) mit einem männlichen Teil (46) und einem weiblichen Teil (48), die geeignet sind, gemeinsam einen Form- bzw. Gusshohlraum (62) zu begrenzen, der an die Außenform des Kanals (12) und des Armaturenbrettes (10) angepasst ist, wobei der männliche Teil (46) einen Kern (54) umfasst, der auf die Innenform des Kanales (12) angepasst ist und an einer schmalen Seele (56) befestigt ist;
(b) Einspritzen eines zu formenden bzw. zu gießenden Materials zwischen den männlichen Teil (46) und den weiblichen Teil (48) der Form (44), so dass der Guss- bzw. Formhohlraum (62) gefüllt wird, und Formen eines offenen Kanals (12) mit ringförmigem offenen Schnitt, wobei entsprechend der Seele (56) ein Längsspalt (26) ausgebildet wird, der von zwei benachbarten bzw. angrenzenden Lippen (28, 30) begrenzt ist;
(c) Trennen des männlichen Teiles (46) von dem weiblichen Teil (48) der Form (44);
(d) Entformen des Kanales (12) und des Armaturenbrettes (10) unter Ausweitung des Spalts (10) zur Extraktion des Kerns (54); und
(e) Zusammenführen der zwei Lippen (28, 30) des Längsspaltes (26), um den Kanal (12) zu schließen.

9. Verfahren nach Anspruch 8, **dadurch gekennzeichnet, dass** der Schritt (b) das Einspritzen des Formmateriales zwischen dem männlichen Teil (46) und dem weiblichen Teil (48) der Form in einer mit Bezug zueinander angenäherten Position umfasst.

10. Verfahren nach Anspruch 8, **dadurch gekennzeichnet, dass** der Schritt (b) das Einspritzen des Form- oder Gussmateriales zwischen den männlichen Teil (46) und den weiblichen Teil (48) der Form in einer beabstandeten Position mit Bezug zueinander umfasst, mit anschließender Annäherung des männlichen Teiles (46) an den weiblichen Teil (48) der Form (44).

11. Verfahren nach einem der Ansprüche 8 bis 10, **dadurch gekennzeichnet, dass** es vor dem Schritt des Einspritzens (b) die Anordnung eines Einsatzes (40) zwischen dem männlichen Teil (46) und dem weiblichen Teil (48) der Form (44) umfasst, um eine Ausstattung des Armaturenbrettes (10) zu bilden.

12. Verfahren nach einem der Anspruch 8 bis 10, **dadurch gekennzeichnet, dass** es vor dem Schritt des Einspritzens (b) die Anordnung einer Beschichtung bzw. eines Überzuges (42) zwischen dem männlichen Teil und dem weiblichen Teil der Form umfasst, um eine Außenhaut des Armaturenbrettes (10) zu bilden, und zwar gegenüberstehend zu dem Kanal (12).

13. Verfahren nach einem der Ansprüche 8 bis 12, **dadurch gekennzeichnet, dass** der Schritt des Einspritzens (b) das Einspritzen eines Kunststoffmateriales umfasst, welches einen Schaum bilden kann.

14. Verfahren nach einem der Ansprüche 8 bis 13, **dadurch gekennzeichnet, dass** der Schritt (e) das Zusammenführen bzw. Verbinden der zwei Lippen (28, 30) des Längsspaltes (26) durch mechanische Anordnung umfasst.

15. Verfahren nach einem der Ansprüche 8 bis 13, **dadurch gekennzeichnet, dass** der Schritt (e) das Zusammenführen bzw. Verbinden der zwei Lippen (28, 30) des Längsspaltes (26) durch Kleben oder Schweißen bzw. Löten umfasst.

16. Fahrzeugarmaturenbrett, **dadurch gekennzeichnet, dass** es zumindest einen integrierten Luftkanal (12) gemäß einem der Ansprüche 1 bis 7 umfasst, oder dadurch, dass es nach einem Verfahren gemäß einem der Ansprüche 8 bis 15 hergestellt ist.

## Claims

1. Integral air conduit for a motor vehicle instrument panel, **characterised in that** it is produced in the form of an open conduit (12) having a longitudinal slot (26) delimited by two lips (28, 30), **in that** the open conduit (12) is produced in a single piece with the instrument panel (10) by moulding from a deformable material allowing mould stripping with broadening of the longitudinal slot (26), and **in that** it comprises joining means (36, 38) for joining the lips (28, 30) of the longitudinal slot (26) after mould stripping.

2. Air conduit according to Claim 1, **characterised in that** the longitudinal slot (26) extends opposite to the instrument panel (10).

3. Air conduit according to one of Claims 1 and 2, **characterised in that** the deformable material is a plastics material.

4. Air conduit according to one of Claims 1 to 3, **characterised in that** the deformable material is a plastic foam.

5. Air conduit according to one of Claims 1 to 4, **characterised in that** the joining means comprise mechanical means (36, 36).

6. Air conduit according to Claim 5, **characterised in that** the joining means comprise two profiles (36, 38) with conjugate shapes, formed respectively on the lips (28, 30) of the longitudinal slot (26) and able to be mutually nested.

7. Air conduit according to one of Claims 1 to 4, **characterised in that** the joining means comprise gluing or welding means.

8. Method of manufacturing an air conduit according to Claims 1 to 7, the conduit having given external and internal shapes, **characterised in that** it comprises the following operations:
(a) providing a mould (44) having a male part (46) and a female part (48) able to delimit conjointly a moulding cavity (62) adapted to the external shape of the conduit (12) and of the instrument panel (10), the male part (46) having a core (54) adapted to the internal shape of the conduit (12) and attached to a narrow web (56);
(b) injecting a moulding material between the male part (46) and the female part (48) of the mould (44) so as to fill the moulding cavity (62) and form an open conduit (12) with an open annular cross-section forming, in correspondence with the web (56), a longitudinal slot (26) delimited by two adjacent lips (28, 30);
(c) separating the male part (46) and the female part (48) from the mould (44) ;
(d) removing the conduit (12) and the instrument panel (10) from the mould whilst broadening the slot (10) for extraction of the core (54); and
(e) joining the two lips (28, 30) of the longitudinal slot (26) in order to close the conduit (12).

9. Method according to Claim 8, **characterised in that** the operation (b) comprises the injection of the moulding material between the male part (46) and the female part (48) of the mould in a position where they are brought close to each other.

10. Method according to Claim 8, **characterised in that** the operation (b) comprises the injection of the moulding material between the male part (46) and the female part (48) of the mould in a position distant from each other, and then the bringing together of the male part (46) and the female part (48) of the mould (44).

11. Method according to one of Claims 8 to 10, **characterised in that** it comprises, before the injection operation (b), the fitting of an insert (40) between the male part (46) and the female part (48) of the mould (44) in order to constitute a reinforcement for the instrument panel (10).

12. Method according to one of Claims 8 to 10, **characterised in that** it comprises, before the injection operation (b), the fitting of a cladding (42) between the male part and the female part of the mould in order to constitute an external skin of the instrument panel (10), opposite to the conduit (12).

13. Method according to one of Claims 8 to 12, **characterised in that** the injection operation (b) comprises the injection of a plastic material able to form a foam.

14. Method according to one of Claims 8 to 13, **characterised in that** the operation (e) comprises the joining of the two lips (28, 30) of the longitudinal slot (26) by mechanical assembly.

15. Method according to one of Claims 8 to 13, **characterised in that** the operation (e) comprises the joining of the two lips (28, 30) of the longitudinal slot (26) by gluing or welding.

16. Vehicle instrument panel, **characterised in that** it comprises at least one integral air conduit (12) according to one of Claims 1 to 7 or as obtained by the method according to one of Claims 8 to 15.
